# EUROPEAN PATENT APPLICATION

(11) **EP 3 396 867 A1**
(43) Date of publication of application: **31.10.2018**
(21) Application number: 17305484.2
(22) Date of filing: 28.04.2017
(51) Int. Cl.: H04B 7/0408, H04B 7/06, H04W 16/28

(54) **A METHOD FOR DETECTING AN EXTERNAL ANTENNA CONNECTED TO A COMMUNICATION DEVICE**

(71) Applicant: Thomson Licensing, 92130 Issy-les-Moulineaux (FR)
(72) Inventor: JACOPS, Davy, 2650 EDEGEM (BE); SANDJAJA, Arya, 2650 EDEGEM (BE); DOMS, Geert, 2650 EDEGEM (BE); DE LENTDECKER, Thierry, 2650 EDEGEM (BE); CLEYNHENS, Stijn, 2650 EDEGEM (BE); VAN BRUGGE, Bart, 2650 EDEGEM (BE); SAS, Bart, 2650 EDEGEM (BE)
(74) Representative: Huchet, Anne

(57) **Abstract**

The invention concerns a method for selecting an antenna of a communication device for exchanging data with a radio access node. In order to select which one of the antennas connected to the communication device should be used to communicate with the radio access node, detection mechanisms based on resistivity measurements are run by the communication devices. However, such detection mechanisms are not reliable for detecting the connection of capacitive antennas. According to an embodiment of the invention, an antenna is selected for exchanging data with the radio access node upon detection of the establishment of a radio connection between said antenna and said radio access node, said detection being triggered when it is determined that the said antenna provides a better reception of the radio signals than other antennas.

## Description

### TECHNICAL FIELD

The present invention relates to a method for detecting the connection of an external antenna to a gateway and for selecting an antenna to be used for exchanging data with a radio access node.

### BACKGROUND

LTE (*Long Term Evolution*) gateways embed an internal radio antenna in order to establish a communication with a radio access node such as an eNodeB. The performances of such an internal antenna may not be sufficient to provide a satisfying quality of reception of the radio signals emitted by the radio access node. In order to improve this situation, an external antenna may be connected to the gateway.

In order to determine which one of the internal antenna or the external antenna should be used to communicate with the radio access node, detection mechanisms based on resistivity measurements are run by the gateways. However, such detection mechanisms are not reliable for detecting the connection of capacitive antennae. Therefore methods for selecting which one of the internal antenna or the external antenna should be used to communicate with the radio access node do not ensure the detection of an external antenna providing a better quality of reception than an internal antenna.

The present invention has been devised with the foregoing in mind.

### SUMMARY OF INVENTION

According to a first aspect of the invention there is provided a method for selecting an antenna connected to a communication device for exchanging data with a radio access node, said method comprising :
- upon detection of an establishment of a radio connection between a first antenna connected to a first radio interface of said communication device and said radio access node, retrieving a first set of parameters representative of radio signals emitted by said radio access node and received by said first radio interface through said first antenna,
- retrieving a second set of parameters representative of radio signals emitted by said radio access node and received by a second radio interface of said communication device,
- selecting a second antenna connected to said second radio interface for exchanging data with said radio access node upon detection of the establishment of a radio connection between said second antenna and said radio access node, said detection being triggered when a comparison between values of the first set of parameters and values of the second set of parameters determines that the second radio interface provides a better reception of the radio signals than the first radio interface.

In an embodiment of the invention, the communication device is a gateway. The first antenna connected to the first radio interface of the gateway corresponds to the internal antenna embedded in all the gateways using LTE *(Long Term Evolution)* or 3G *(Third Generation)* such as UMTS *(Universal Mobile Telecommunications System)* compliant techniques to establish a communication to a broadband network.

In the above-mentioned method, when a radio connection is established between the internal antenna and a radio access node, such as an eNodeB or NodeB, a first set of parameters representative of the radio signals emitted by the radio access node are retrieved.

In order to determine if an external antenna, which corresponds to the second antenna, is connected to a second radio interface of the gateway, a second set of parameters representative of the radio signals emitted by the radio access node are retrieved. This retrieval of the seconds set of parameters is executed whether an external antenna is connected to the second radio interface or not.

The Man skilled in the art trying to find a solution overcoming drawbacks of the prior art would not find a solution such as the one proposed by the inventors. Indeed, the Man skilled in the art would not considered a solution consisting in measuring a set of parameters representative of radio signals received by a radio interface of gateway without knowing if an antenna is actually connected to the second radio interface of the gateway because, in the event where there is no external antenna connected to the second radio interface of the gateway, this would result in the gateway being unable to communicate with the radio access point since the internal antenna is not selected for exchanging data with the radio access node.

The solution proposed by the inventors does the exact opposite. Indeed, in the case where the comparison of the values of the first set of parameters and the values of the second set of parameters shows that the reception of the radio signals by the second radio interface is better, the establishment of a connection between the radio access node and an external antenna is checked. If a connection between an external antenna and the radio access node is actually established, the connection of the external antenna to the second radio interface is confirmed. The external antenna can thus be selected for exchanging data with the radio access node since it is certain that an external antenna is connected to the second radio interface of the gateway.

The method according to an embodiment of the invention may have the advantage of being fast and of requiring low computation capacities compared to existing antenna selection methods.

According to an embodiment of the invention, when no connection between said first antenna and said radio access node is detected, the method further comprises :
- detecting the establishment of a radio connection between said second antenna and said radio access node.

When no connection can be established between the internal antenna and the radio access node, the detection of the establishment of a radio connection between the second radio interface and the radio access node is triggered without regard of the values of the parameters of the second set of parameters, the goal here being to provide a radio connection to the gateway.

According to an embodiment of the invention, the method further comprises :
- selecting the first antenna for exchanging data with said radio access node when the comparison between the values of the first set of parameters and the values of the second set of parameters determines that the first radio interface provides a better reception of the radio signals than the second radio interface.

When the comparison between the values of the first set of parameters and the values of the second set of parameters determines that the first radio interface provides a better reception of the radio signals than the second radio interface, the internal antenna is selected since a connection has already been established with the radio access node. In this case, the connection of an external antenna to the second radio interface is not detected. Thus the gateway is quickly connected to the radio access node and can provide services to an end-user.

Another object of the invention concerns a communication device capable of selecting an antenna for exchanging data with a radio access node, said communication device comprising /
- a first and a second radio interface,
- a first antenna connected to the first radio interface,
- at least a hardware processor configured to :
- upon detection of an establishment of a radio connection between said first antenna and said radio access node, retrieve a first set of parameters representative of radio signals emitted by said radio access node and received by said first radio interface through said first antenna,
- retrieve a second set of parameters representative of radio signals emitted by said radio access node and received by said second radio interface of said communication device,
- select a second antenna connected to said second radio interface for exchanging data with said radio access node upon detection of the establishment of a radio connection between said second antenna and said radio access node, said detection being triggered when a comparison between values of the first set of parameters and values of the second set of parameters determines that the second radio interface provides a better reception of the radio signals than the first radio interface.

According to an embodiment of the invention, when no connection between said first antenna and said radio access node is detected, the hardware processor is further configure to :
- detect the establishment of a radio connection between said second antenna and said radio access node.

According to another embodiment of the invention, the processor is configured to :
- select the first antenna for exchanging data with said radio access node when the comparison between the values of the first set of parameters and the values of the second set of parameters determines that the first radio interface provides a better reception of the radio signals than the second radio interface.

According to another embodiment of the invention, the first antenna is an internal antenna embedded in the communication device.

According to another embodiment of the invention, the second antenna is an external antenna to be connected to the second radio interface.

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Embodiments of the invention will now be described, by way of example only, and with reference to the following drawings in which:
FIG. 1 represents a system in which an embodiment of the invention may be implemented;
FIG. 2 is a schematic block diagram illustrating an example of the home gateway according to an embodiment of the invention,
FIG. 3 is a flow chart for explaining a process for determining if an external antenna is connected to the home gateway and to select which of the internal antenna or the external antenna is to be used to exchange data with the radio access node 110 according to an embodiment of the invention.

### DETAILED DESCRIPTION

As will be appreciated by one skilled in the art, aspects of the present principles can be embodied as a system, method or computer readable medium. Accordingly, aspects of the present principles can take the form of an entirely hardware embodiment, an entirely software embodiment, (including firmware, resident software, micro-code, and so forth) or an embodiment combining software and hardware aspects that can all generally be referred to herein as a "circuit", "module", or "system". Furthermore, aspects of the present principles can take the form of a computer readable storage medium. Any combination of one or more computer readable storage medium(a) may be utilized.

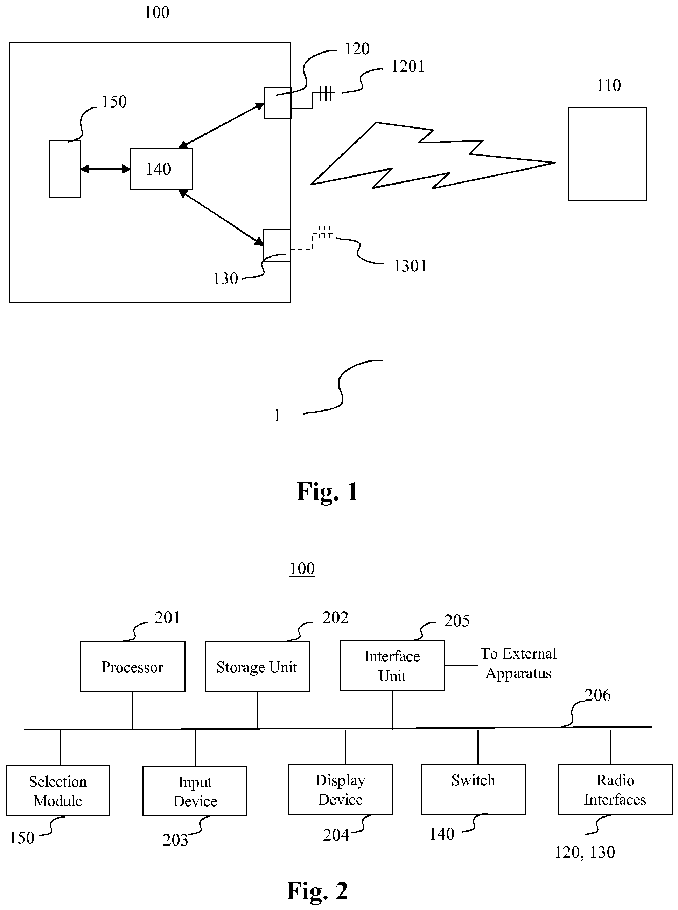

**Figure 1** represents a system 1 in which an embodiment of the invention may be implemented. The system 1 comprises a gateway 100 and a radio access node 110.

In an embodiment of the invention, the home gateway 100 is a home gateway.

A home gateway is a network device interconnecting a broadband network, such as an operator network or the Internet, and a LAN (*Local Area Network*). The home gateway receives data from the broadband network and transmits them to a given communication device connected to the LAN. The home gateway also transmits data sent by at least one of the communication device to the broadband network.

As represented on figure 1, the home gateway 100 comprises at least two radio interfaces 120 and 130 for communicating with the broadband network. Such radio interface 120 and 130 are configured to receive and transmit data from and to the radio access node 110 through a radio connection. When the radio access node is an eNodeB (*evolved Node B*), then the radio connection between one of the radio interface 120, 130 of the home gateway 100 and the radio access node 110 is established in accordance with LTE specifications. A first antenna 1201, called internal antenna since it is embedded in the home gateway 100, is connected to the first radio interface 120.

A second antenna 1301, called external, may be connected to the second radio interface 130. Such an external antenna 1301 may be connected to the second radio interface 130 in order to improve the quality of radio communications between the home gateway 100 and the radio access node 110.

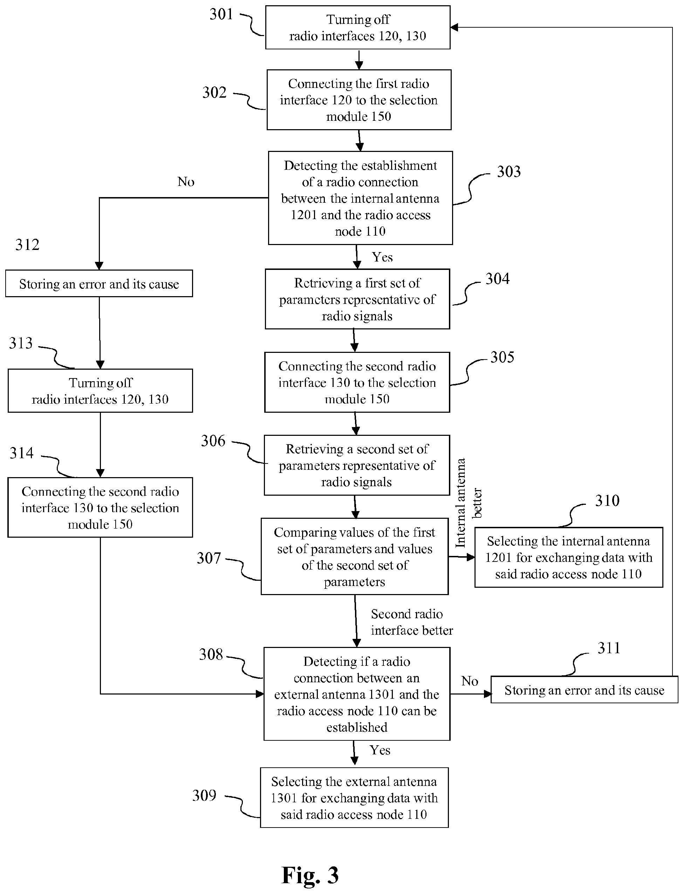

The radio interfaces 120, 130 are connected to a switch 140 embedded in the home gateway 100. The switch 140 is connected to a selection module 150 configured to detect the connection of antennae to the radio interfaces 120, 130 and to select an antenna through which data is to be exchanged between the home gateway 100 and the radio access node 110, as will be shown in more detail in figure 3.

**Figure 2** is a schematic block diagram illustrating an example of the home gateway according to an embodiment of the invention.

The home gateway 100 comprises at least one hardware processor 201, a storage unit 202, an input device 203, a display device 204, and an interface unit 205 which are connected by a bus 206. Of course, constituent elements of the home gateway 100 may be connected by a connection other than a bus connection.

The processor 201 controls operations of the home gateway 100. The storage unit 202 stores at least one program capable of selecting which antenna among the internal antenna 1201 and the external antenna 1301 connected to the home gateway 100 is to be used for exchanging data with the radio access node 110 to be executed by the processor 201, and various data, such as parameters used by computations performed by the processor 201, intermediate data of computations performed by the processor 201, and so on. The processor 201 may be formed by any known and suitable hardware, or software, or a combination of hardware and software. For example, the processor 201 may be formed by dedicated hardware such as a processing circuit, or by a programmable processing unit such as a CPU (*Central Processing Unit*) that executes a program stored in a memory thereof.

The storage unit 202 may be formed by any suitable storage or means capable of storing the program, data, or the like in a computer-readable manner. Examples of the storage unit 202 include non-transitory computer-readable storage media such as semiconductor memory devices, and magnetic, optical, or magneto-optical recording media loaded into a read and write unit. The program causes the processor 201 to perform a process for selecting which antenna among the internal antenna 1201 and the external antenna 1301 connected to the home gateway 100 is to be used for exchanging data with the radio access node 110 according to an embodiment of the present disclosure as described hereinafter with reference to figure 3.

The input device 203 may be formed by a keyboard, a pointing device such as a mouse, or the like for use by the user to input commands, to make user's selections of parameters used for selecting the transmission interface to be used. The display device 204 may be formed by a display device to display, for example, a Graphical User Interface (GUI). The input device 203 and the output device 204 may be formed integrally by a touchscreen panel, for example.

The interface unit 205 provides an interface between the home gateway 100 and an external apparatus. The interface unit 205 may be communicable with the external apparatus via cable or wireless communication. In an embodiment, the external apparatus may be an optical acquisition system such as an actual camera.

The switch 140, and the radio interfaces 120 and 130 are connected to the bus 206 as well.

**Figure 3** is a flow chart for explaining a process for determining if an external antenna 1301 is connected to the home gateway 100 and to select which of the internal antenna 1201 or the external antenna 1301 is to be used to exchange data with the radio access node 110 according to an embodiment of the invention.

In a step 301, the processor 201 turns off the first radio interface 120 and the second radio interface 130. This enables to clear the storage unit 202 of data related to previous execution of the method according to an embodiment of the invention.

In a step 302, the switch 140 connects the first radio interface 120, to which the internal antenna 1201 is connected, to the selection module 150.

In a step 303, the processor 201 detects if a radio connection between the internal antenna 1201 and the radio access node 110 can be established. In order to detect if a radio connection is established between the internal antenna 1201 and the radio access node 110, an Attach Request is emitted by the internal antenna 1201 to the radio access node 110, id an Attach Complete message is received by the internal antenna 1201, then a radio connection is established between the internal antenna 1201 and the radio access node 110.

If the establishment of a radio connection between the internal antenna 1201 connected to the first radio interface 120 and the radio access node 110 is detected, then the selection module 150 retrieves a first set of parameters representative of radio signals emitted by the radio access node 110 and received by the first radio interface 120 through said internal antenna 1201 during a step 304. Those parameters represent values of the radio signal strength and the radio signal quality such as the RSSI (*Received Signal Strength Indicator*) when 3G or LTE techniques are used for establishing a radio connection between the gateway 100 and the access node 110, or the RSRP (*Reference Signal Received Power*) and/or the RSRQ (*Reference Signal Received Quality*) when LTE techniques are used for establishing a radio connection between the gateway 100 and the access node 110. This first set of parameters is stored on the storage unit 202.

In a step 305, the switch 140 connects the second radio interface 130 to the selection module 150. In an embodiment, connecting the second radio interface 130 to the selection module 150 implies disconnecting the first radio interface 120 from the selection module 150.

During a step 306, the selection module 150 retrieves a second set of parameters representative of radio signals emitted by the radio access node 110 and received by the second radio interface 130. Those parameters represent values of the radio signal strength and the radio signal quality such as the RSSI (*Received Signal Strength Indicator*) when 3G or LTE techniques are used for establishing a radio connection between the gateway 100 and the access node 110, or the RSRP (*Reference Signal Received Power*) and/or the RSRQ (*Reference Signal Received Quality*) when LTE techniques are used for establishing a radio connection between the gateway 100 and the access node 110.This second set of parameters is stored on the storage unit 202 as well. For example, an LTE module of the radio interface 130 transmits sets of parameters representative of received radio signals every five seconds.

In a step 307, the selection module 150 compares values of the first set of parameters and values of the second set of parameters stored in the storage unit 202 in order to determine which one of the first radio interface 120 and the second radio interface 130 provides the best reception of the radio signals.

If the second radio interface 130 provides a better reception of the radio signals than the first radio interface 120, then the processor 201 detects if a radio connection between an external antenna 1301 and the radio access node 110 can be established in a step 308.

If the establishment of a radio connection between the external antenna 1301 connected to the second radio interface 130 and the radio access node 110 is detected, then the selection module 150 detects that an external antenna 1301 is actually connected to the second radio interface 130 and selects the external antenna 1301 for exchanging data with said radio access node 110 in a step 309.

If during step 307, the selection module 150 determines that the first radio interface 120 provides the best reception of the radio signals, then in a step 310, the switch 140 connects the first radio interface 120 to the selection module 150 which selects the internal antenna 1201 for exchanging data with said radio access node 110. In this case, steps 308 and 309 are not executed. In an embodiment, connecting the first radio interface 120 to the selection module 150 implies disconnecting the second radio interface 130 from the selection module 150.

If during step 308 the processor 201 detects that no radio connection can be established between an external antenna 1301 and the radio access node 110, it means that no external antenna is connected to the second radio interface 130.

Then in step 311, an error and its cause is stored in the storage unit 202. Then the processor 201 executes step 301.

If during step 303 no radio connection between the internal antenna 1201 and the radio access node 110 can be detected by the processor 201, then in a step 312 an error and its cause is stored in the storage unit 202.

Then in step 313, the processor 201 turns the first radio interface 120 and the second radio interface 130 off. This enables to clear the storage unit 202 of data related to previous execution of the method according to an embodiment of the invention.

In a step 314, the switch 140 connects the second radio interface 130 to the selection module 150. Then step 308 is executed. In an embodiment, connecting the second radio interface 130 to the selection module 150 implies disconnecting the first radio interface 120 from the selection module 150.

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

## Claims

1. A method for selecting an antenna connected to a communication device for exchanging data with a radio access node, said method comprising :
- upon detection of an establishment of a radio connection between a first antenna connected to a first radio interface of said communication device and said radio access node, retrieving a first set of parameters representative of radio signals emitted by said radio access node and received by said first radio interface through said first antenna,
- retrieving a second set of parameters representative of radio signals emitted by said radio access node and received by a second radio interface of said communication device,
- selecting a second antenna connected to said second radio interface for exchanging data with said radio access node upon detection of the establishment of a radio connection between said second antenna and said radio access node, said detection being triggered when a comparison between values of the first set of parameters and values of the second set of parameters determines that the second radio interface provides a better reception of the radio signals than the first radio interface.

2. The method according to claim 1 wherein, when no connection between said first antenna and said radio access node is detected, the method further comprises :
- detecting the establishment of a radio connection between said second antenna and said radio access node.

3. The method according to claim 1 comprising :
- selecting the first antenna for exchanging data with said radio access node when the comparison between the values of the first set of parameters and the values of the second set of parameters determines that the first radio interface provides a better reception of the radio signals than the second radio interface.

4. The method according to claim 1 wherein the first antenna is an internal antenna embedded in the communication device.

5. The method according to claim 1 wherein the second antenna is an external antenna to be connected to the second radio interface.

6. A communication device capable of selecting an antenna for exchanging data with a radio access node, said communication device comprising /
- a first and a second radio interface,
- a first antenna connected to the first radio interface,
- at least a hardware processor configured to :
- upon detection of an establishment of a radio connection between said first antenna and said radio access node, retrieve a first set of parameters representative of radio signals emitted by said radio access node and received by said first radio interface through said first antenna,
- retrieve a second set of parameters representative of radio signals emitted by said radio access node and received by said second radio interface of said communication device,
- select a second antenna connected to said second radio interface for exchanging data with said radio access node upon detection of the establishment of a radio connection between said second antenna and said radio access node, said detection being triggered when a comparison between values of the first set of parameters and values of the second set of parameters determines that the second radio interface provides a better reception of the radio signals than the first radio interface.

7. The communication device according to claim 6 wherein, when no connection between said first antenna and said radio access node is detected, the hardware processor is further configure to :
- detect the establishment of a radio connection between said second antenna and said radio access node.

8. The communication device according to claim 6 wherein the processor is configured to :
- select the first antenna for exchanging data with said radio access node when the comparison between the values of the first set of parameters and the values of the second set of parameters determines that the first radio interface provides a better reception of the radio signals than the second radio interface.

9. The communication device according to claim 6 wherein the first antenna is an internal antenna embedded in the communication device.

10. The communication device according to claim 6 wherein the second antenna is an external antenna to be connected to the second radio interface.

11. A computer program **characterized in that** it comprises program code instructions for the implementation of the method for selecting an antenna according to any of claims 1 to 3 when the program is executed by a processor.

12. A processor readable medium having stored therein instructions for causing a processor to perform the method for selecting an antenna according to any of claims 1 to 3.
